# EUROPÄISCHE PATENTSCHRIFT

(11) **EP 2 708 517 B1**
(45) Veröffentlichungstag und Bekanntmachung des Hinweises auf die Patenterteilung: **28.06.2017**
(21) Anmeldenummer: 13184143.9
(22) Anmeldetag: 12.09.2013
(51) Int. Cl.: C03B 19/10, C03C 11/00

(54) **VERFAHREN ZUR HERSTELLUNG VON BLÄHGLAS**
METHOD FOR THE PREPARATION OF FOAMED GLASS
PROCÉDÉ DE FABRICATION DE VERRE EXPANSÉ

(30) Priorität: 13.09.2012 AT 3642012 U
(43) Veröffentlichungstag der Anmeldung: 19.03.2014
(73) Patentinhaber: Binder + Co Aktiengesellschaft, 8200 Gleisdorf (AT)
(72) Erfinder: Brunnmair, Ernst Erwin, 8045 Graz (AT); Pramer, Jürgen, 8044 Graz (AT)
(74) Vertreter: KLIMENT & HENHAPEL

(56) Entgegenhaltungen:
- EP-A1- 1 213 268
- EP-A2- 0 353 860
- WO-A1-2009/009817
- DE-A1-102006 020 351
- JP-A- S5 860 634
- JP-A- S61 132 538
- US-A- 4 017 290
- US-A- 4 966 617
- DATABASE WPI Week 200125 Thomson Scientific, London, GB; AN 2001-243021 XP002717387, & RU 2 162 825 C2 (KANEV V P) 10. Februar 2001 (2001-02-10)

## Beschreibung

### GEBIET DER ERFINDUNG

Die vorliegende Erfindung betrifft ein Verfahren zur Herstellung von Blähglas mittels Blähen durch thermisches Behandeln von Partikeln, vorzugsweise Granulatpartikeln, bestehend aus einer Ausgangsmischung, wobei die Ausgangsmischung Glasstaubkörner, vorzugsweise Altglasmehlkörner, und Bindemittel, vorzugsweise Wasserglas, sowie Treibmittel, welches die Partikel bei der thermischen Behandlung bläht, umfasst, wobei als Treibmittel Körner gebrochener Mineralstoffe, vorzugsweise Gesteinsmehlkörner, mit gebundenem Wasser oder Kohlendioxid zum Einsatz kommen, wobei die Partikel in einen Ofen aufgegeben werden, wobei die Partikel auf zumindest eine kritische Temperatur der Körner gebrochener Mineralstoffe erhitzt werden, die größer gleich einer Erweichungstemperatur der Partikel ist, wobei bei der kritischen Temperatur der Körner gebrochener Mineralstoffe die Oberflächen der Körner gebrochener Mineralstoffe plastisch werden und die Körner gebrochener Mineralstoffe aufgrund des gebundenen Wassers oder Kohlendioxids gebläht werden und die blähenden Körner gebrochener Mineralstoffe ihrerseits das jeweilige Partikel blähen und wobei bei der Erweichungstemperatur der Partikel die Oberflächen der Glasstaubkörner plastisch werden und jeweils eine geschlossene Oberfläche der Partikel ausbilden.

### STAND DER TECHNIK

Leichtstoffe sind in der Bauindustrie gefragte Ausgangsmaterialien für diverse Anwendungen wie der Fertigputzeindustrie oder in der Isoliertechnik. Blähglas ist ein solcher Leichtstoff mit geringer Schüttdichte und wird aus rezykliertem Altglas, genauer gesagt aus Altglasstaub oder Altglasmehl hergestellt. Dabei bezeichnet "Altglasmehl" zu kleinen Partikeln gemahlenes Verpackungsglas, wie z.B. Glasflaschen, Konservengläser oder allgemein Hohlglas.

Blähglas liegt üblicherweise in Form von runden, insbesondere kugelförmigen oder kugelformähnlichen Teilchen vor, die keine scharfen Kanten aufweisen. Die Blähglasteilchen bestehen aus aufgeschäumtem bzw. geblähtem Glas mit entsprechend vielen Poren.

Bei der konventionellen Herstellung von Blähglas wird der Altglasstaub bzw. das Altglasmehl zunächst mit einem Bindemittel, wie z.B. Wasserglas, vermischt. Zum Schäumen bzw. Blähen wird nun ein Treibmittel hinzugesetzt, das bei Temperaturerhöhung CO₂ freisetzt. Beispielsweise wird der Mischung Kohlenstoff zugegeben, der zu CO₂ verbrennt. Alternativ kann auch direkt CO₂ in das Gemisch eingeblasen werden. Wichtig ist, dass die Freisetzung des CO₂ bei Temperaturen geschieht, bei denen das Glas weich ist, sodass eine Schäumung bzw. eine Blähung des Glases erfolgen kann.

Nachteilig bei den genannten Verfahren ist, dass das Glasschaumgranulat bei der Herstellung stark zum Verkleben neigt, was der Erzeugung von kugelförmigen oder kugelformähnlichen Blähglasteilchen entgegensteht. Der Grund hierfür liegt in der Tatsache, dass Glasstaub beim Erweichen starke kohäsive Kräfte aufweist. Üblicherweise müssen daher bei konventionellen Blähverfahren Trennmittel eingesetzt werden, welche die Oberfläche der zu blähenden Teilchen mit einer nichtklebenden Schicht überzieht. Der Effekt dieser nichtklebenden Schicht ist ähnlich wie beim Handling von Teig in der Küche, wo als Trennmittel Mehl verwendet wird. Der Einsatz solcher Trennmittel ist sehr aufwendig; noch dazu muss das Trennmittel vom Fertigprodukt, d.h. von den Blähglasteilchen, abgeschieden - und vorzugsweise dem eigentlichen Blähprozess wieder zugeführt - werden.

Ein Beispiel hierfür ist aus der RU 2162825 C2 bekannt, wo bei der Blähung in einem Drehofen Quarzsand als Trennmittel verwendet wird. Die Ausgangsmischung für das Blähen umfasst Glasstaub sowie eine Mischung aus Kalkstein und Dolomit als Blähmittel, wobei das Blähmittel 4 Gew.-% des Glases ausmacht.

In der JP S58 60634 A wird hingegen kein Trennmittel verwendet, stattdessen findet ein Sintern der Partikel statt, d.h. ein Verkleben der Partikel wird nicht verhindert. Dabei kommt eine Ausgangsmischung für das Blähen zum Einsatz, die Glasstaub umfasst sowie Kalksteinstaub als Blähmittel, wobei der Kalksteinstaub 1 Gew.-% bis 10 Gew.-% ausmacht.

Auch in der JP S61 132538 A werden die Partikel unter Rotation gesintert. Dabei kommt eine Ausgangsmischung für das Blähen zum Einsatz, die Glasstaub umfasst sowie anorganischen Staub, beispielsweise CaCO₃-Staub, als Blähmittel, wobei das Blähmittel 0,5 Gew.-% bis 10 Gew.-% bezogen auf den Glasstaub ausmacht.

Bei der Herstellung von hohlen Mikrokugeln gleicher Größe, in welchen Brennstoff für Fusionsreaktoren gespeichert werden kann, ist es aus der US 4017290 A bekannt, dass Glasfritten in einen Schachtofen aufgegeben werden und durch ein Heizrohr entlang von drei voneinander getrennt steuerbaren Heizzonen fallen. Dabei expandieren die Glasfritten zu Hohlkugeln, indem Material, welches von den Glasfritten umschlossen ist und z.B. Harnstoff sein kann, die aufgeschmolzenen Glasfritten bläht.

Schließlich ist für das thermische Blähen von Perlitsand aus der EP 0353860 A2 ein Schachtofen bekannt, wobei Perlitsand durch ein Heizrohr fällt, welches von mehreren, vertikal voneinander beabstandeten und unabhängig voneinander regelbaren Heizelementen umgeben ist.

### AUFGABE DER ERFINDUNG

Aufgabe der vorliegenden Erfindung ist es daher, die oben genannten Nachteile zu vermeiden. Insbesondere soll ein Verfahren zur Erzeugung von Blähglasteilchen zur Verfügung gestellt werden, bei dem auf den Einsatz von Trennmittel verzichtet werden kann. Darüber hinaus soll eine geschlossene, vorzugsweise vollständig geschlossene Oberfläche der geblähten Teilchen erzielt werden, d.h. die Teilchen sollen geschlossenzellig gebläht werden, um hygroskopische Eigenschaften der geblähten Teilchen zu vermeiden und somit die Einsetzbarkeit der Blähglasteilchen, insbesondere als Isoliermaterial, zu erhöhen.

### DARSTELLUNG DER ERFINDUNG

Kern der Erfindung ist, bekannte Treibmittel durch Körner gebrochener Mineralstoffe, vorzugsweise Gesteinsmehlkörner, zu ersetzen, in welchen Wasser oder Kohlendioxid gebunden ist. Dahinter steckt die in einer Vielzahl an Versuchen gewonnene Erkenntnis, dass solche Gesteinsmehlkörner selbst bei einer kritischen Temperatur isenthalp blähen. D.h. bei der kritischen Temperatur werden die Oberflächen der Gesteinsmehlkörner plastisch und die Gesteinsmehlkörner werden somit aufgrund des gebundenen Wassers oder Kohlendioxids gebläht, wobei dieser Prozess mit konstanter Enthalpie abläuft und die Gesteinsmehlkörner beim Blähen daher abrupt abkühlen. Die Abkühlung, die auch als Temperatursturz bezeichnet wird und beispielsweise über 100°C ausmachen kann, bewirkt wiederum, dass die Gesteinsmehlkörner bzw. deren Oberflächen beim Blähen wieder erstarren.

Es werden daher Partikel einer Ausgangsmischung hergestellt bzw. werden Granulatpartikel durch Granulieren einer Ausgangsmischung, vorzugsweise mittels eines Mischers oder Granuliertellers, hergestellt, wobei die Ausgangsmischung einerseits Altglasmehlkörner und Wasserglas als Bindemittel, andererseits als Treibmittel die Gesteinsmehlkörner mit gebundenem Wasser oder Kohlendioxid umfasst.

Durch die Erwärmung der so hergestellten Granulatpartikel, vorzugsweise in einem Hochtemperaturstrahlungsschacht, werden die Oberflächen der Altglasmehlkörner bei einer Erweichungstemperatur der Granulatpartikel, die kleiner gleich der kritischen Temperatur der Gesteinsmehlkörner ist, plastisch bzw. schmelzen. Werden die Granulatpartikel daher auf eine Temperatur, die größer gleich der kritischen Temperatur der Gesteinsmehlkörner ist, aufgeheizt, so sind sowohl die Oberflächen der Altglasmehlkörner als auch die Oberflächen der Gesteinsmehlkörner plastisch.

Aufgrund der starken Kohäsionskräfte der Altglasmehlkörner bildet sich in der Folge jeweils eine geschlossene Oberfläche der Granulatpartikel aus. Gleichzeitig blähen die Gesteinsmehlkörner in den Granulatpartikeln, wobei die Gesteinsmehlkörner die dafür notwendige thermische Energie aus den Granulatpartikeln beziehen. Durch das Blähen der Gesteinsmehlkörner werden die Granulatpartikel selbst gebläht. Da das Blähen der Gesteinsmehlkörner isenthalp erfolgt, kühlen die Gesteinsmehlkörner beim Blähvorgang ab, wodurch auch die Granulatpartikel beim Blähen abkühlen. Dies hat ein Erstarren bzw. Verfestigen der Granulatpartikel bzw. deren Oberflächen zur Folge, wodurch ein Zusammenkleben der geblähten Granulatpartikel unterbunden wird, ohne dass hierfür Trennmittel eingesetzt werden müsste.

Der Blähvorgang selbst findet in einem Ofen entlang einer Förderstrecke statt, die mehrere voneinander getrennt angeordnete Heizzonen aufweist, wobei jede Heizzone mit zumindest einem unabhängig steuerbaren Heizelement beheizt werden kann. Die Beförderung der Partikel erfolgt vorzugsweise mittels Schwerkraft, wofür sich ein schachtförmiger, senkrecht stehender Ofen besonders gut eignet. In diesen werden die zu blähenden Granulatpartikel von oben, vorzugsweise mittels einer Schurre, aufgegeben. Die Granulatpartikel fallen entsprechend entlang der Förderstrecke senkrecht durch den Ofenschacht, wobei die Heizzonen in diesem Fall vertikal voneinander getrennt angeordnet sind.

Hierdurch werden die Granulatpartikel auf zumindest die kritische Temperatur der Gesteinsmehlkörner erhitzt. Somit kann der oben beschriebene isenthalpe Blähprozess entlang der Förderstrecke stattfinden, und die geblähten Granulatpartikel können am Ende der Förderstrecke bzw. am unteren Ende des Ofenschachts ausgetragen werden.

Daher ist es bei einem Verfahren zur Herstellung von Blähglas mittels Blähen durch thermisches Behandeln von Partikeln, vorzugsweise Granulatpartikeln, bestehend aus einer Ausgangsmischung, wobei die Ausgangsmischung Glasstaubkörner, vorzugsweise Altglasmehlkörner, und Bindemittel, vorzugsweise Wasserglas, sowie Treibmittel, welches die Partikel bei der thermischen Behandlung bläht, umfasst, wobei als Treibmittel Körner gebrochener Mineralstoffe, vorzugsweise Gesteinsmehlkörner, mit gebundenem Wasser oder Kohlendioxid zum Einsatz kommen und wobei die Partikel in einen Ofen aufgegeben werden, erfindungsgemäß vorgesehen, dass das Blähen der Partikel die folgenden Schritte umfasst:
- Befördern der Partikel in einem Ofenschacht des Ofens entlang einer Förderstrecke durch mehrere, entlang der Förderstrecke voneinander getrennt angeordnete Heizzonen, vorzugsweise durch Schwerkraft;
- Erhitzen der Partikel auf zumindest eine kritische Temperatur der Körner gebrochener Mineralstoffe, die größer gleich einer Erweichungstemperatur der Partikel ist,
   wobei bei der kritischen Temperatur der Körner gebrochener Mineralstoffe die Oberflächen der Körner gebrochener Mineralstoffe plastisch werden und die Körner gebrochener Mineralstoffe aufgrund des gebundenen Wassers oder Kohlendioxids gebläht werden und die blähenden Körner gebrochener Mineralstoffe ihrerseits das jeweilige Partikel blähen
   und wobei bei der Erweichungstemperatur der Partikel die Oberflächen der Glasstaubkörner plastisch werden und jeweils eine geschlossene Oberfläche der Partikel ausbilden;
- Austragen der geblähten Partikel aus dem Ofen bzw. Ofenschacht.

Wie gesagt, verfestigen sich die Oberflächen der geblähten Granulatpartikel aufgrund des mit dem isenthalpen Blähen einhergehenden Temperatursturzes, sodass auf diese Weise grundsätzlich geschlossenzellige geblähte Partikel bzw. geschlossenzelliges Blähglas erzeugt wird. Für die Qualität der geschlossenen Oberflächen ist jedoch die Temperaturbehandlung nach dem Blähprozess entscheidend. Wenn die Granulatpartikel beispielsweise nach dem Blähvorgang entlang der verbleibenden Förderstrecke wieder bis zur oder gar über die kritische Temperatur aufgeheizt werden, besteht die Gefahr des Aufreißens der Oberflächen der Granulatpartikel, was unerwünschte hygroskopische Eigenschaften der geblähten Granulatpartikel zur Folge hat. Um dies zu verhindern wird der mit dem Blähvorgang einhergehende Temperatursturz detektiert. Geht man davon aus, dass die Granulatpartikel ab deren Einbringung in den Ofen bzw. in die Förderstrecke eine Temperaturerhöhung aufgrund der in den Heizzonen zugeführten thermischen Energie erfahren, stellt der Temperatursturz eine erste Verringerung der Temperatur der Granulatpartikel zwischen zwei aufeinander folgenden Positionen entlang der Förderstrecke dar. Sollten entlang der Förderstrecke bis zum eigentlichen Blähvorgang Temperaturprofile eingestellt werden, die an einer oder mehreren Stellen eine Abnahme der Granulatpartikeltemperatur vorsehen, so ist mit erster Verringerung jene Verringerung gemeint, die nicht dem eingestellten Temperaturprofil entspricht.

Die Heizelemente der Heizzonen der verbleibenden Förderstrecke können somit gezielt gesteuert werden, um die Oberflächenbeschaffenheit der geblähten Granulatpartikel wunschgemäß zu beeinflussen. Schließlich kann auf diese Weise auch der für das Blähen aufgewendete Energieeintrag optimiert bzw. gezielt minimiert werden.

Entsprechend ist es beim erfindungsgemäßen Verfahren weiters vorgesehen, dass bei Detektion einer ersten Verringerung der Temperatur der Partikel zwischen zwei aufeinander folgenden Positionen entlang der Förderstrecke Heizelemente entlang der verbleibenden Förderstrecke in Abhängigkeit von der kritischen Temperatur der Körner gebrochener Mineralstoffe und/oder der Erweichungstemperatur der Partikel geregelt werden.

Um sicherzugehen, dass sich die Temperatur der Granulatpartikel nach dem isenthalpen Blähvorgang nicht wieder auf oder über die kritische Temperatur erhöht, ist es bei einer bevorzugten Ausführungsform des erfindungsgemäßen Verfahrens vorgesehen, dass die Leistung der Heizelemente entlang der gesamten verbleibenden Förderstrecke auf Null gesetzt wird. Dies stellt den einfachsten Fall der Regelung der Heizelemente entlang der verbleibenden Förderstrecke dar.

Um ein gleichmäßiges Verfestigen mit geschlossenen Oberflächen bzw. ein Glasieren der Oberflächen der geblähten Granulatpartikel zu begünstigen, hat es sich in Versuchen als günstig erwiesen, die geblähten Granulatpartikel entlang der verbleibenden Förderstrecke auf Temperaturen um den Erweichungspunkt bzw. um die Erweichungstemperatur zu bringen. D.h. zumindest entlang eines Teils der verbleibenden Förderstrecke erreicht die Temperatur der geblähten Granulatpartikel einen Bereich um die Erweichungstemperatur. Daher ist es bei einer bevorzugten Ausführungsform des erfindungsgemäßen Verfahrens vorgesehen, dass die Partikel entlang der verbleibenden Förderstrecke auf eine Temperatur gebracht werden, die im Bereich von 70% bis 110% der Erweichungstemperatur der Partikel liegt, um ein Glasieren der Oberflächen der Partikel zu begünstigen. Es sei bemerkt, dass zur Berechnung des genannten Bereichs für eine konkrete Erweichungstemperatur diese klarerweise in Kelvin anzugeben ist.

Zur Detektion des Temperatursturzes kann an mehreren Stellen entlang der Förderstrecke die Temperatur der Granulatpartikel gemessen werden. Die Temperaturmessung kann direkt oder indirekt erfolgen. Eine direkte Messung wäre durch Temperatursensoren, die im Ofeninneren angeordnet sind, gegeben. Dabei können die Temperatursensoren mit den Granulatpartikeln in Berührung kommen oder auch nicht. In letzterem Fall wird lediglich die Temperatur in den Heizzonen bestimmt.

Wichtig ist, dass die Temperatursensoren an zueinander beabstandeten Positionen über die Förderstrecke verteilt angeordnet sind, um eine Eingrenzung des örtlichen Auftretens des Temperatursturzes zu ermöglichen.

Entsprechend ist es bei einer bevorzugten Ausführungsform des erfindungsgemäßen Verfahrens vorgesehen, dass die Temperatur der Partikel im Ofenschacht an mehreren, entlang der Förderstrecke voneinander beabstandeten Positionen direkt oder indirekt gemessen wird, um eine erste Verringerung der Temperatur der Partikel, bevorzugt von mindestens 100°C, zwischen zwei aufeinander folgenden Positionen entlang der Förderstrecke zu detektieren.

Eine indirekte Messung kann beispielsweise über eine Kühlwassertemperaturmessung in einem nachgeschalteten Prozess oder über die Bestimmung einer Wärmeflussänderung von einer Heizzone zur anderen erfolgen. Hierbei ist der Wärmefluss von den Heizelementen zu den Granulatpartikeln gemeint. Dieser hängt von der Temperaturdifferenz zwischen den Heizelementen und den Granulatpartikeln ab. Während des Aufheizens der Granulatpartikel verringert sich die Temperaturdifferenz zwischen Heizelementen und Granulatpartikeln sukzessive. Entsprechend verringert sich der Wärmefluss, d.h. die festgestellte Änderung des Wärmeflusses von einer Heizzone zur nächsten ist zunächst eine Abnahme. Unmittelbar nach dem Blähvorgang und dem damit einhergehenden Temperatursturz ist die Temperaturdifferenz zwischen Granulatpartikeln und Heizelementen deutlich größer als unmittelbar vor dem Blähvorgang. Entsprechend nimmt auch der Wärmefluss zu, d.h. die festgestellte Änderung des Wärmeflusses von einer Heizzone zur nächsten ist nun eine Zunahme. Diese detektierte Zunahme des Wärmeflusses eignet sich daher, um den Temperatursturz und dessen Bereich entlang der Förderstrecke festzustellen.

Entsprechend ist es bei einer bevorzugten Ausführungsform des erfindungsgemäßen Verfahrens vorgesehen, dass die Änderung des Wärmeflusses von den Heizelementen zu den Partikeln bestimmt wird, wobei die Änderung zwischen einer Heizzone und einer nächsten, vorzugsweise der darauf folgenden Heizzone bestimmt wird, und dass die Detektion einer ersten Verringerung der Temperatur der Partikel zwischen zwei aufeinander folgenden Positionen entlang der Förderstrecke durch Detektieren einer Wärmeflusszunahme von einer Heizzone zur nächsten, vorzugsweise zur darauf folgenden Heizzone erfolgt.

Aufgrund der hohen Prozesstemperatur sind im Ofenschacht, der wie ein Kamin wirkt, Auftriebskräfte vorhanden, die sich besonders auf kleinere Granulatpartikel auswirken. Entsprechend bewirken die Auftriebskräfte bei kleineren und damit leichteren Granulatpartikeln eine längere Verweilzeit im Ofenschacht als bei größeren und schwereren Granulatpartikeln. Dies bedeutet, dass die kleineren, leichteren Granulatpartikel im Ofenschacht überhitzen können, was beispielsweise die mechanischen Eigenschaften dieser geblähten Granulatpartikel verschlechtert. Um das längere Verweilen von kleineren, leichteren Granulatpartikeln gegenüber größeren, schwereren Granulatpartikeln im Ofenschacht zu verhindern, wird der Ofenschacht mit leichtem Unterdruck betrieben. Dies bewirkt, dass mit den Granulatpartikeln, vorzugsweise von oben nach unten, Prozessluft durch den Ofenschacht gesaugt wird und die Verweilzeit von großen, schweren und kleinen, leichten Granulatpartikeln angeglichen wird. Daher ist es bei einer bevorzugten Ausführungsform des erfindungsgemäßen Verfahrens vorgesehen, dass die Partikel zusammen mit einer ersten Prozessluft durch den Ofenschacht, vorzugsweise durch Beaufschlagung des Ofenschachts mit Unterdruck, gesaugt werden.

Um die Verweilzeit der Granulatpartikel im Ofenschacht möglichst genau einstellen zu können, ist es bei einer bevorzugten Ausführungsform des erfindungsgemäßen Verfahrens vorgesehen, dass die erste Prozessluft mit im Wesentlichen konstanter Geschwindigkeit durch den Ofenschacht strömt. Dies kann beispielsweise dadurch erreicht werden, dass der Ofenschacht nach unten hin weiter ausgeführt ist als oben, sich also zum Ende der Förderstrecke erweitert. Hierdurch wird eine Zunahme der Strömungsgeschwindigkeit der ersten Prozessluft kompensiert, wenn diese im Ofenschacht eine Erwärmung erfährt. Solcherart kann die Strömungsgeschwindigkeit im Ofenschacht annähernd konstant gehalten werden.

Werden die Granulatpartikel mittels Schwerkraft durch den, vorzugsweise senkrecht stehenden, Ofenschacht befördert, nimmt ihre Geschwindigkeit zunächst gemäß dem Fallgesetz zu. Wegen der geringen Größe der ungeblähten Granulatpartikel und deren relativ hoher Dichte spielt die Abbremsung aufgrund des Luftwiderstands nur eine untergeordnete Rolle. Daher erreichen die ungeblähten Granulatpartikel nicht nur eine Geschwindigkeit, die größer ist als die Strömungsgeschwindigkeit der ersten Prozessluft, sondern werden gemäß dem Fallgesetz weiter beschleunigt.

Durch die Blähung nimmt das Volumen der Granulatpartikel schlagartig zu, und es verringert sich ihre Dichte. Der Luftwiderstand nimmt daher ebenfalls schlagartig zu, und die geblähten Granulatpartikel werden von der ersten Prozessluft stark abgebremst. Hierauf fallen die Granulatpartikel mit einer im Wesentlichen konstanten Geschwindigkeit durch den Ofenschacht, deren Konstanz durch die Konstanz der Strömungsgeschwindigkeit der ersten Prozessluft bestimmt ist. Der Absolutwert dieser Fallgeschwindigkeit hängt vom Durchmesser bzw. Volumen und der Dichte der geblähten Granulatpartikel ab und wird im Allgemeinen größer sein als die Strömungsgeschwindigkeit der ersten Prozessluft. D.h. die Fallgeschwindigkeit der geblähten Granulatpartikel ergibt sich durch das Wechselspiel zwischen Fallgesetz und dem Widerstand der mit im Wesentlichen konstanter Geschwindigkeit durch den Ofenschacht strömenden ersten Prozessluft, wobei der Luftwiderstand die dominierende Rolle innehat.

Daher ist es bei einer bevorzugten Ausführungsform des erfindungsgemäßen Verfahrens vorgesehen, dass die geblähten Partikel mit im Wesentlichen konstanter Geschwindigkeit durch den Ofenschacht befördert werden, wobei die Geschwindigkeit der geblähten Partikel vorzugsweise von deren Durchmesser abhängt. Entsprechend stellt sich in Abhängigkeit des Durchmessers (und der Dichte) der Granulatpartikel eine maximale Verweilzeit der Granulatpartikel im Ofenschacht ein, die nicht überschritten wird.

Im Falle von sehr großen bzw. sehr schweren ungeblähten Granulatpartikeln ergibt sich das Problem, dass diese zu rasch durch den Ofenschacht fallen, sodass keine vollständige Durchwärmung dieser Granulatpartikel stattfindet. Indem die erste Prozessluft gegen die Schwerkraft bzw. mit einer Richtungskomponente gegen die Schwerkraft durch den Ofenschacht gesaugt wird, kann die Verweilzeit dieser sehr großen bzw. sehr schweren Granulatpartikel im Ofenschacht verlängert werden. Bei einem senkrecht stehenden Ofen würde die erste Prozessluft beispielsweise vom oberen Ende des Ofenschachts abgesaugt werden. Somit kann erreicht werden, dass auch diese Granulatpartikel bei ihrer Beförderung im Ofenschacht entlang der Förderstrecke vollständig durchwärmt werden. Daher ist es bei einer bevorzugten Ausführungsform des erfindungsgemäßen Verfahrens vorgesehen, dass eine erste Prozessluft mit einer Richtungskomponente gegen die Schwerkraft durch den Ofenschacht gesaugt wird.

Unabhängig von den oben beschriebenen Maßnahmen zur Vergleichmäßigung der Strömungsgeschwindigkeit der ersten Prozessluft bzw. zur Einstellung der Verweildauer der Granulatpartikel im Ofenschacht ist es grundsätzlich natürlich so, dass kleine, leichte Granulatpartikel schneller die Blähtemperatur erreichen als große, schwere. Vor allem für diese kleineren Granulatpartikel besteht daher die Gefahr einer Überhitzung. Kommt es nun zu einer Kollision mit einer inneren Oberfläche des Ofenschachts, führt dies zum Anbacken an selbiger.

Um solchen Kollisionen und potentiellem Anbacken entgegen zu wirken, wird eine zweite Prozessluft von der inneren Oberfläche des Ofenschachts in Richtung des radialen Zentrums des Ofenschachts eingeblasen. Die Luftmenge wird dabei durch ein entsprechendes Drosselorgan, vorzugsweise ein regelbares Ventil, eingestellt.

Daher ist es bei einer bevorzugten Ausführungsform des erfindungsgemäßen Verfahrens vorgesehen, dass eine mittels mindestens eines Drosselorgans regulierte Menge an zweiter Prozessluft von einer inneren Oberfläche des Ofenschachts in Richtung zum radialen Zentrum des Ofenschachts geblasen wird, um ein Anbacken der Partikel an der inneren Oberfläche des Ofenschachts zu verhindern.

Das Verfestigen bzw. Glasieren der Oberflächen der geblähten Partikel lässt sich durch einen kalten Luftstrom beeinflussen. Zu diesem Zweck wird direkt nach dem Ofenschacht dem vorhandenen Gemisch aus Prozessluft und geblähten Granulatpartikeln Kühlluft derart beigemengt, dass eine Abkühlung der Granulatpartikel auf unter 100°C, vorzugsweise auf unter 80°C erfolgt. Entsprechend ist es bei einer bevorzugten Ausführungsform des erfindungsgemäßen Verfahrens vorgesehen, dass beim Austragen der Partikel aus dem Ofen bzw. Ofenschacht Kühlluft beigemengt wird, um die Partikel auf unter 100°C, vorzugsweise auf unter 80°C abzukühlen.

Die so abgekühlten Granulatpartikel werden nach dem Austragen aus dem Ofenschacht, das vorzugsweise über eine wassergekühlte Schurre erfolgen kann, in einem weiteren Schritt mit Hilfe einer pneumatischen Flugstromförderung transportiert und weiter abgekühlt, womit Oberflächenbeschaffenheit und/oder Festigkeit der Granulats ebenfalls beeinflusst werden. Entsprechend ist es bei einer bevorzugten Ausführungsform des erfindungsgemäßen Verfahrens vorgesehen, dass die Partikel nach dem Austragen mittels einer pneumatischen Flugstromförderung in einen Bevorratungsbehälter befördert werden, wobei hierbei ein kühles Fluid, bevorzugt kühle Luft, zum Einsatz kommt, wodurch die Partikel abgekühlt werden und im Bevorratungsbehälter vorzugsweise Raumtemperatur aufweisen. Als Ausgangsmaterial für Gesteinsmehl mit gebundenem H₂O eignen sich beispielsweise die vulkanischen Gesteine Perlit und Obsidian, deren kritische Temperatur zwischen 750°C und 850°C liegt. Der Anteil an gebundenem H₂O beträgt dabei zwischen 2 und 5 Gew.-%. Die folgende Tabelle gibt einen Überblick über weitere geeignete Ausgangsmaterialen für Körner gebrochener Mineralstoffe mit gebundenem H₂O oder CO₂, welches als Blähmittel die Körner gebrochener Mineralstoffe bläht. Hierbei werden neben dem jeweiligen Blähmittelanteil am Mineralstoff in Gew.-% auch die chemische Formel des jeweiligen Mineralstoffs sowie die aus der Literatur bekannte kritische Temperatur, Tₖᵣᵢₜ, in °C angegeben.

| **Mineralstoff** | **Blähmittel** | **Anteil [Gew.-%]** | **Chemische Formel** | **Tₖᵣᵢₜ [°C]** |
|---|---|---|---|---|
| Kalzit | CO₂ | ∼50 | CaCO₃ | 800 - 900 |
| Magnesit | CO₂ | ∼50 | MgCO₃ | 500 - 600 |
| Kaolinit | H₂O | ∼14 | Al₄[(OH)₈\|Si₄O₁₀] | 500 - 600 |
| Dolomit | CO₂ | ∼50 | CaMg(CO₃)₂ | 550 - 800 |
| Hydromagnesit | H₂O/CO₂ | ∼50 | Mg₅(CO₃)₄(OH)₂.4H₂O | 400 -500 |
| Huntit | CO₂ | ∼50 | CaMg₃(CO₃)₄ | 500 - 600 (Magnesit) |
| | | | | 700 (Kalziumkarbonat) |
| Magnesiumhydroxid | H₂O | ∼20 | Mg(OH)₂ | 400 - 500 |
| Kalkhydrat | H₂O | ∼20 | Ca(OH)₂ | 500 - 600 |

Aus den angegebenen chemischen Formeln ist das jeweilige Blähmittel an sich sofort erkennbar. Beispielsweise folgt aus der chemischen Formel für Huntit, CaMg₃(CO₃)₄, dass in diesem Mineralstoff CO₂ gebunden vorliegt. Huntit beinhaltet sogar zwei Komponenten, die CO₂ freisetzen, nämlich Magnesit (zwischen 500°C und 600°C) und Kalziumkarbonat (bei ca. 700°C). Entsprechend ist es bei einer bevorzugten Ausführungsform des erfindungsgemäßen Verfahrens vorgesehen, dass die Körner gebrochener Mineralstoffe zumindest eine der folgenden Substanzen aufweisen: Perlit, Kaolinit, Hydromagnesit, Obsidian, Kalzit, Magnesit, Dolomit, Huntit.

Die Glasstaubkörner enthalten kein gebundenes Blähmittel. Somit kann der Anteil des Blähmittels (H₂O oder CO₂) an einem Granulatpartikel durch das Mischungsverhältnis in der Ausgangsmischung - d.h. durch den Anteil der Gesteinsmehlkörner, die das jeweilige Blähmittel in gebundener Form enthalten, an der Ausgangsmischung - eingestellt werden. In Versuchen hat sich ein Anteil des Blähmittels an einem Granulatpartikel von 0,3 Gew.-% bis 6 Gew.-% als optimal erwiesen, um geblähte Granulatpartikel bzw. Blähglas mit dem erfindungsgemäßen Verfahren zu erzeugen.

Daher ist es bei einer bevorzugten Ausführungsform des erfindungsgemäßen Verfahrens vorgesehen, dass der Anteil an Wasser oder Kohlendioxid an den Partikeln in einem Bereich von 0,3 Gew.-% bis 6 Gew.-% liegt. Analog ist es bei einem Partikel, vorzugsweise Granulatpartikel, zur Durchführung eines erfindungsgemäßen Verfahrens, bestehend aus einer Ausgangsmischung, wobei die Ausgangsmischung Glasstaubkörner, vorzugsweise Altglasmehlkörner, und Bindemittel, vorzugsweise Wasserglas, sowie Treibmittel zur Blähung des Partikels bei thermischer Behandlung umfasst, wobei die Ausgangsmischung als Treibmittel Körner gebrochener Mineralstoffe, vorzugsweise Gesteinsmehlkörner, mit gebundenem Wasser oder Kohlendioxid aufweist, vorgesehen, dass der Anteil an Wasser oder Kohlendioxid an dem Partikel in einem Bereich von 0,3 Gew.-% bis 6 Gew.-% liegt.

Es sei bemerkt, dass sich der Anteil von gebundenem Wasser an den Partikeln darüber hinaus auch durch eine thermische Vorbehandlung der (nicht geblähten) Partikel feineinstellen lässt, indem Temperaturhöhe und Dauer der Vorbehandlung entsprechend gewählt werden. Die thermische Vorbehandlung kann außerdem zum ersten Aufheizen der Partikel verwendet werden, sodass im Ofenschacht für das Blähen eine geringere Menge thermischer Energie zugeführt werden muss als ohne vorhergehendes Aufheizen. Dies gestattet es, im Ofenschacht den Durchsatz zu erhöhen.

### KURZE BESCHREIBUNG DER FIGUREN

Die Erfindung wird nun anhand eines Ausführungsbeispiels näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine schematische Darstellung eines Querschnitts durch ein Granulatpartikel zur Durchführung eines erfindungsgemäßen Verfahrens, wobei das Granulatpartikel aus einer Ausgangsmischung besteht, die Körner gebrochener Mineralstoffe als Treibmittel umfasst, und eine Temperatur aufweist, die sowohl kleiner als eine kritische Temperatur der Körner gebrochener Mineralstoffe als auch kleiner als eine Erweichungstemperatur des Granulatpartikels ist
- Fig. 2: eine schematische Darstellung eines Querschnitts durch das Granulatpartikel aus Fig. 1, jedoch bei einer Temperatur, die zwischen der Erweichungstemperatur und der kritischen Temperatur liegt
- Fig. 3: eine schematische Schnittansicht eines Ofens zur Durchführung des erfindungsgemäßen Verfahrens, wobei sich im Ofen befindliche Granulatpartikel ebenfalls schematisch skizziert sind

### WEGE ZUR AUSFÜHRUNG DER ERFINDUNG

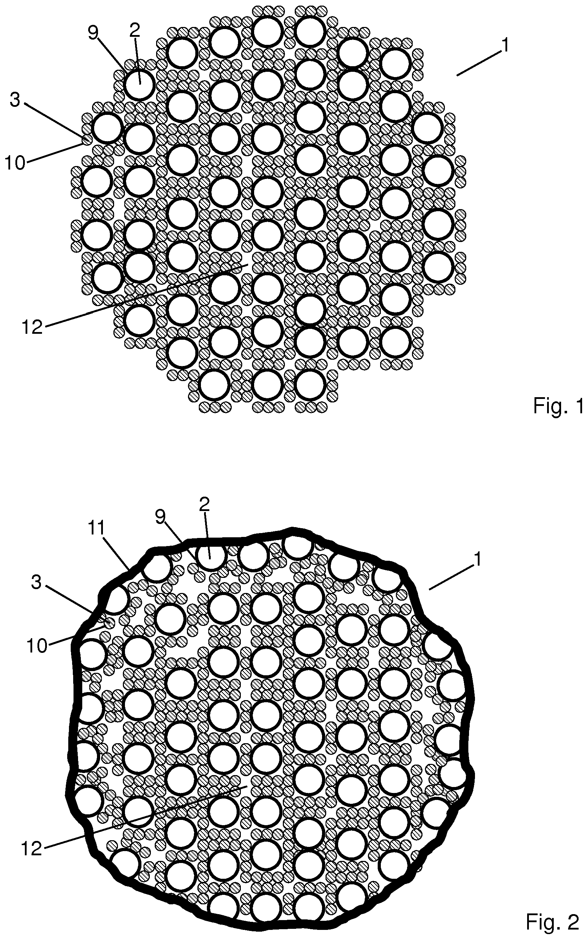

Fig. 1 zeigt eine schematische Darstellung eines Schnitts durch ein Granulatpartikel 1, welches in einem erfindungsgemäßen Verfahren gebläht wird, um Blähglas zu erzeugen. Das Granulatpartikel 1 besteht aus einer Ausgangsmischung, welche Glasstaubkörner 2, Gesteinsmehlkörner 3 mit gebundenem H₂O oder CO₂ und Wasserglas 12 als Bindemittel umfasst.

Die Gesteinsmehlkörner 3 weisen jeweils eine Oberfläche 10 auf, die bei einer kritischen Temperatur, Tₖᵣᵢₜ, plastisch wird. Daher werden die Gesteinsmehlkörner 3 bei einer Temperatur größer gleich Tₖᵣᵢₜ aufgrund des gebundenen Wassers, das verdampft, oder des gebundenen Kohlendioxids, gebläht.

Die Glasstaubkörner 2 weisen jeweils eine Oberfläche 9 auf, die bei einer Erweichungstemperatur des Granulatpartikels 1, T_{Erw}, plastisch wird. Idealerweise ist T_{Erw} kleiner gleich Tₖᵣᵢₜ. Heizt man das Granulatpartikel 1 und damit die Glasstaubkörner 2 auf eine Temperatur größer gleich T_{Erw} auf, so bildet sich aufgrund der starken Kohäsionskräfte der Glasstaubkörner 2 eine geschlossene Oberfläche 11 des Granulatpartikels 1. Ist die Temperatur dabei kleiner als Tₖᵣᵢₜ, kommt es jedoch zu keiner Blähung. Fig. 2 illustriert diesen Fall, wo die Temperatur zwischen T_{Erw} und Tₖᵣᵢₜ liegt.

Ist die Temperatur hingegen größer gleich Tₖᵣᵢₜ, so blähen die Gesteinsmehlkörner 3 und blähen damit auch das gesamte Granulatpartikel 1 auf. Die Gesteinsmehlkörner 3 fungieren also als Treibmittel für das Blähen des Granulatpartikels 1.

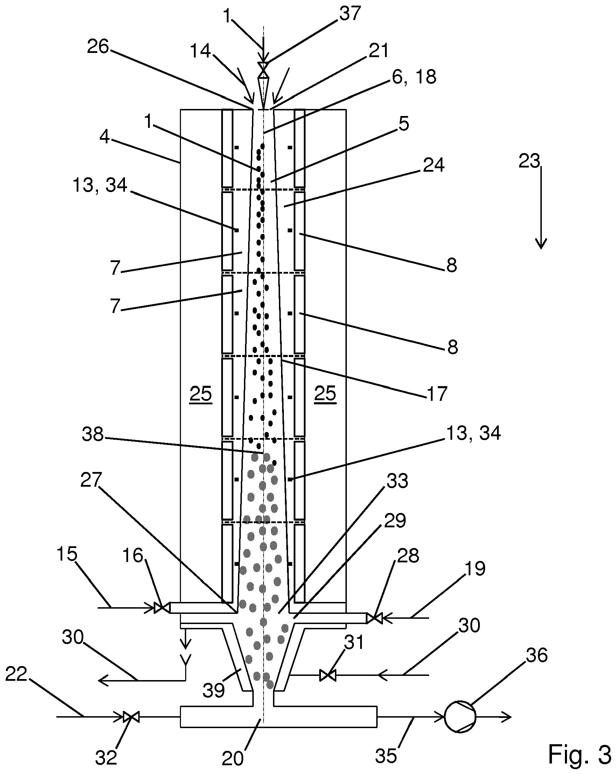

Dieser Blähvorgang wird in Fig. 3 illustriert, die eine schematische Schnittansicht eines Ofens 4 mit einem Ofenschacht 5 zur Durchführung des erfindungsgemäßen Verfahrens zeigt, wobei sich im Ofenschacht 5 befindende Granulatpartikel 1 ebenfalls schematisch skizziert sind.

Der Ofenschacht 5 verläuft im gezeigten Ausführungsbeispiel senkrecht und weist an einem oberen Ende 26 eine Aufgabeöffnung 21 für das zu blähende Material bzw. für die zu blähenden Granulatpartikel 1 auf. Entsprechend werden im gezeigten Ausführungsbeispiel die Granulatpartikel 1 durch die Schwerkraft in einer Förderrichtung 23 senkrecht von oben nach unten entlang einer Förderstrecke 6 befördert, zu einer Austrageöffnung 33 an einem unteren Ende 27 des Ofens 4 bzw. Ofenschachts 5.

Dabei können die Granulatpartikel 1 vor Zuführung zum Ofen 4 vorgeheizt und hinsichtlich des Anteils an gebundenem Wasser vorkonditioniert werden, beispielsweise in einem Fließbettofen (nicht dargestellt). Die Aufgabe der Granulatpartikel 1 in den Ofen 4 bzw. Ofenschacht 5 kann über eine (nicht dargestellte) Schurre erfolgen bzw. kann die Aufgabe der Granulatpartikel 1 über ein Ventil 37 geregelt werden.

Die Weite des Ofenschachts 5, d.h. der Querschnitt des Ofenschachts 5 normal auf die Förderrichtung 23, nimmt vorzugsweise von der Aufgabeöffnung 21 zur Austrageöffnung 33 hin zu. Im gezeigten Ausführungsbeispiel erfolgt diese Aufweitung kontinuierlich, sodass der Querschnitt des Ofenschachts 5 parallel zur Förderrichtung 23 eine konische Form aufweist. Dabei kann der Querschnitt des Ofenschachts 5 normal auf die Förderrichtung 23 eine rechteckige bzw. quadratische Form oder runde bzw. kreisförmige Form aufweisen.

Selbstverständlich sind auch andere Querschnitte des Ofenschachts 5 denkbar, insbesondere mit einer konstanten Weite des Ofenschachts 5. D.h. es kann auch ein gerader Ofenschacht 5 realisiert werden, wobei in diesem Fall der Querschnitt des Ofenschachts 5 parallel zur Förderrichtung 23 eine rechteckige Form aufweist.

Der Ofen 4 ist in Förderrichtung 23 in Heizzonen 7 (in Fig. 3 durch strichlierte waagrechte Linien angedeutet) mit jeweils mindestens einem Heizelement 8 unterteilt, um die durch den Ofenschacht 5 fallenden Granulatpartikel 1 aufzuheizen. Im gezeigten Ausführungsbeispiel sind die Heizelemente 8 symmetrisch bezüglich einer Ebene angeordnet, die durch ein radiales Zentrum 18 des Ofenschachts 5 verläuft. Bei den Heizelementen 8 kann es sich sowohl um elektrische Heizelemente 8 als auch um gasbetriebene Heizelemente 8 handeln. Entscheidend ist, dass die Heizelemente 8 zur Abgabe von Wärmestrahlung ausgelegt sind. D.h. die Übertragung von Wärme auf die Granulatpartikel 1 erfolgt in erster Linie mittels Wärmestrahlung und nicht etwa durch Konvektion.

In Richtung zum radialen Zentrum 18 des Ofens 4 gesehen ist nach den Heizelemente 8 hitzebeständiges Gewebe 24 angeordnet. Der Ofenschacht 5 weist daher eine innere Oberfläche 17 auf, die mit hitzebeständigem Gewebe 24 ausgekleidet ist, bzw. bildet das hitzebeständige Gewebe 24 die innere Oberfläche 17 des Ofenschachts 5. Das hitzebeständige Gewebe 24 hat gegenüber hitzebeständigen Stählen den Vorteil geringerer Wärmespeichermassen bzw. -kapazitäten, sodass rasche An- und Abfahrzeiten des Ofens 4 realisiert werden können.

Das hitzebeständige Gewebe 24 ist außerdem für Gas, insbesondere für Luft durchlässig. Daher kann eine zweite Prozessluft 15 durch das Gewebe 24 hindurch in Richtung radiales Zentrum 18 des Ofenschachts 5 eingeblasen werden, um einem Anbacken von erhitzten Granulatpartikeln 1 an der inneren Oberfläche 17 des Ofenschachts 5 entgegen zu wirken. Die zweite Prozessluft 15 wird dabei in dem zwischen Ofenschacht 5 bzw. dessen innerer Oberfläche 17 und einer äußeren Wärmeisolierung 25 des Ofens 4 befindlichen Zwischenraum, in dem auch die Heizelemente 8 angeordnet sind, geleitet. Die Menge an zweiter Prozessluft 15 wird über ein Ventil 16, welches vorzugsweise regelbar ist, kontrolliert. Idealerweise kann diese Prozessluft 15 mit einer Temperatursensorspülung kombiniert werden.

Im Gewebe 24 sind außerdem Temperatursensoren 34 angeordnet. Die Temperatursensoren 34 sind dabei an vertikal voneinander beabstandeten Positionen 13 angeordnet, sodass in jeder Heizzone 7 zumindest ein Temperatursensor 34 liegt. Im gezeigten Ausführungsbeispiel wird also die Temperatur der Granulatpartikel 1 über die in der Heizzone 7 vorherrschende Temperatur ermittelt.

Heizelemente 8 und Temperatursensoren 34 sind mit einer Regel- und Steuereinheit (nicht dargestellt) verbunden, die die Position bzw. den Bereich 38 im Ofenschacht 5, an welcher bzw. in welchem die Blähung der Granulatpartikel 1 stattfindet, aufgrund der Temperaturdaten bestimmt. An dieser Position bzw. in diesem Bereich 38 tritt nämlich eine deutliche Verminderung der Temperatur, ein Temperatursturz von beispielsweise über 100°C der geblähten Granulatpartikel 1 auf. Dieser Temperatursturz ist Folge eines isenthalpen Blähvorgangs der Gesteinsmehlkörner 3 in den Granulatpartikel 1 bei einer Temperatur größer gleich Tₖᵣᵢₜ. Dies bewirkt, dass die Granulatpartikel 1 gebläht werden und dabei abkühlen.

Z.B. haben die Granulatpartikel 1 unmittelbar vor ihrer Blähung auf Basis von Wasser ca. 780°C und unmittelbar nach dem isenthalpen Blähvorgang nur noch ca. 590°C, d.h. ein Temperatursturz von 190°C tritt in diesem Beispiel auf. Die Regel- und Steuereinheit regelt die Heizelemente 8, die in Förderrichtung 23 gesehen nach der Position bzw. dem Bereich 38 des Temperatursturzes liegen, so, dass keine weitere bzw. nochmalige Erhöhung der Temperatur der bereits geblähten Granulatpartikel 1 auf oder über Tₖᵣᵢₜ mehr erfolgt.

Im einfachsten Fall wird die Leistung dieser Heizelemente 8 auf Null gesetzt. Alternativ wird die Leistung dieser Heizelemente 8 so geregelt, dass die Temperatur der Granulatpartikel 1 entlang der verbleibenden Strecke in einem Bereich von 70% bis 110% von T_{Erw} (in Kelvin) zu liegen kommt, um ein Glasieren der Oberflächen 11 der geblähten Granulatpartikel 1 zu begünstigen.

Um die geblähten Granulatpartikel 1 rasch abkühlen zu können, wird beim Austragen aus dem Ofen 4 Kühlluft 19 eingeblasen. Hierfür ist im Bereich der Austrageöffnung 33 eine Ausströmöffnung 29 für die Kühlluft 19 vorgesehen. Über ein, vorzugsweise regelbares Ventil 28 kann die Menge an Kühlluft 19 reguliert werden. Die Kühlluft 19 bewirkt ein Abkühlen der geblähten Granulatpartikel 1 auf unter 100°C, vorzugsweise unter 80°C.

In Förderrichtung 23 gesehen nach der Austrageöffnung 33, unmittelbar an die Ausströmöffnung 29 für die Kühlluft 19 anschließend ist eine Schurre 39 angeordnet. Diese wird mit Kühlwasser 30 gekühlt, dessen Menge über ein, vorzugsweise regelbares Ventil 31 kontrolliert wird. Hierdurch werden die geblähten Granulatpartikel 1 weiter gekühlt.

Über die Schurre 39 gelangen die geblähten Granulatpartikel 1 schließlich in eine Flugstromförderung 20, mit welcher die Granulatpartikel 1 in einen Bevorratungsbehälter (nicht dargestellt) befördert werden. Die Flugstromförderung 20 arbeitet mit kühler Luft 22, deren Menge mittels eines, vorzugsweise regelbaren Ventils 32 kontrolliert wird. Dabei wird die kühle Luft 22 bzw. die kühle Luft 35 mit den expandierten Granulatpartikeln 1 z.B. von einer Vakuumpumpe 36 angesaugt.

Die sich in der Flugstromförderung 20 rasch bewegende kühle Luft 22 bzw. kühle Luft 35 mit expandierten Granulatpartikeln 1 erzeugt gegenüber dem Ofenschacht 5 einen Unterdruck. Dieser Unterdruck bewirkt, dass die Granulatpartikel 1 gemeinsam mit erster Prozessluft 14 von der Aufgabeöffnung 21 durch den Ofenschacht 5 gesaugt werden. Dies wiederum führt im Zusammenspiel mit dem sich in Richtung der Austrageöffnung 33 erweiternden Ofenschacht 5 dazu, dass sich die geblähten Granulatpartikel 1 gemeinsam mit der ersten Prozessluft 14 mit einer möglichst konstanten und vorzugsweise derselben Geschwindigkeit durch den Ofenschacht 5 bewegen.

Darüber hinaus kann die Definition der Position bzw. des Bereichs 38 weiter verbessert werden, indem durch Siebung (nicht dargestellt) der Granulatpartikel 1 vor Eintritt in den Ofen 4 eine möglichst einheitliche Größe (und damit Masse) der Granulatpartikel 1 sichergestellt wird, sodass alle Granulatpartikel 1 möglichst nach derselben Dauer der thermischen Behandlung im Ofenschacht 5 blähen.

### BEZUGSZEICHENLISTE

- 1: Granulatpartikel
- 2: Glasstaubkorn
- 3: Gesteinsmehlkorn
- 4: Ofen
- 5: Ofenschacht
- 6: Förderstrecke
- 7: Heizzone
- 8: Heizelement
- 9: Oberfläche eines Glasstaubkorns
- 10: Oberfläche eines Gesteinsmehlkorns
- 11: Geschlossene Oberfläche eines Granulatpartikels
- 12: Wasserglas
- 13: Position für Temperaturmessung
- 14: Erste Prozessluft
- 15: Zweite Prozessluft
- 16: Ventil für zweite Prozessluft
- 17: Innere Oberfläche des Ofenschachts
- 18: Radiales Zentrum des Ofenschachts
- 19: Kühlluft
- 20: Flugstromförderung
- 21: Aufgabeöffnung
- 22: Kühle Luft für Flugstromförderung
- 23: Förderrichtung
- 24: Hitzebeständiges Gewebe
- 25: Wärmeisolierung
- 26: Oberes Ende des Ofens bzw. Ofenschachts
- 27: Unteres Ende des Ofens bzw. Ofenschachts
- 28: Ventil für die Kühlluft
- 29: Ausströmöffnung für die Kühlluft
- 30: Kühlwasser
- 31: Ventil für Kühlwasser
- 32: Ventil für kühle Luft der Flugstromförderung
- 33: Austrageöffnung
- 34: Temperatursensor
- 35: Kühle Luft mit geblähten Granulatpartikeln
- 36: Vakuumpumpe
- 37: Ventil für Granulatpartikel
- 38: Position bzw. Bereich des Temperatursturzes
- 39: Schurre

## Patentansprüche

1. Verfahren zur Herstellung von Blähglas mittels Blähen durch thermisches Behandeln von Partikeln, vorzugsweise Granulatpartikeln (1), bestehend aus einer Ausgangsmischung, wobei die Ausgangsmischung Glasstaubkörner (2), vorzugsweise Altglasmehlkörner, und Bindemittel, vorzugsweise Wasserglas (12), sowie Treibmittel, welches die Partikel (1) bei der thermischen Behandlung bläht, umfasst, wobei als Treibmittel Körner gebrochener Mineralstoffe, vorzugsweise Gesteinsmehlkörner (3), mit gebundenem Wasser oder Kohlendioxid zum Einsatz kommen, wobei die Partikel (1) in einen Ofen (4) aufgegeben werden, wobei die Partikel (1) auf zumindest eine kritische Temperatur der Körner gebrochener Mineralstoffe (3) erhitzt werden, die größer gleich einer Erweichungstemperatur der Partikel (1) ist, wobei bei der kritischen Temperatur der Körner gebrochener Mineralstoffe (3) die Oberflächen (10) der Körner gebrochener Mineralstoffe (3) plastisch werden und die Körner gebrochener Mineralstoffe (3) aufgrund des gebundenen Wassers oder Kohlendioxids gebläht werden und die blähenden Körner gebrochener Mineralstoffe (3) ihrerseits das jeweilige Partikel (1) blähen und wobei bei der Erweichungstemperatur der Partikel (1) die Oberflächen (9) der Glasstaubkörner (2) plastisch werden und jeweils eine geschlossene Oberfläche (11) der Partikel (1) ausbilden, **dadurch gekennzeichnet, dass** das Verfahren die folgenden Schritte umfasst:
- Befördern der Partikel (1) in einem Ofenschacht (5) des Ofens (4) entlang einer Förderstrecke (6) durch mehrere, entlang der Förderstrecke (6) voneinander getrennt angeordnete Heizzonen (7), vorzugsweise durch Schwerkraft;
- Austragen der geblähten Partikel (1) aus dem Ofenschacht (5),
- wobei bei Detektion einer ersten Verringerung der Temperatur der Partikel (1) zwischen zwei aufeinander folgenden Positionen (13) entlang der Förderstrecke (6), welche erste Verringerung der mit dem isenthalpen Blähen einhergehenden Verringerung der Temperaturentspricht, Heizelemente (8) entlang der verbleibenden Förderstrecke (6) in Abhängigkeit von der kritischen Temperatur der Körner gebrochener Mineralstoffe (3) und/oder der Erweichungstemperatur der Partikel (1) geregelt werden, sodass sich die Temperatur der geblähten Partikel (1) nicht wieder auf oder über die kritische Temperatur erhöht.

2. Verfahren nach Anspruch 1, **dadurch gekennzeichnet, dass** die Leistung der Heizelemente (8) entlang der gesamten verbleibenden Förderstrecke (6) auf Null gesetzt wird.

3. Verfahren nach Anspruch 1, **dadurch gekennzeichnet, dass** die Partikel (1) entlang der verbleibenden Förderstrecke (6) auf eine Temperatur gebracht werden, die im Bereich von 70% bis 110% der Erweichungstemperatur der Partikel (1) liegt, um ein Glasieren der Oberflächen (11) der Partikel (1) zu begünstigen.

4. Verfahren nach einem der Ansprüche 1 bis 3, **dadurch gekennzeichnet, dass die** Temperatur der Partikel (1) im Ofenschacht (5) an mehreren, entlang der Förderstrecke (6) voneinander beabstandeten Positionen (13) direkt oder indirekt gemessen wird, um eine erste Verringerung der Temperatur der Partikel (1), bevorzugt von mindestens 100°C, zwischen zwei aufeinander folgenden Positionen (13) entlang der Förderstrecke (6) zu detektieren.

5. Verfahren nach einem der Ansprüche 1 bis 4, **dadurch gekennzeichnet, dass** die Änderung des Wärmeflusses von den Heizelementen (8) zu den Partikeln (1) bestimmt wird, wobei die Änderung zwischen einer Heizzone (7) und einer nächsten, vorzugsweise der darauf folgenden Heizzone (7) bestimmt wird, und dass die Detektion einer ersten Verringerung der Temperatur der Partikel (1) zwischen zwei aufeinander folgenden Positionen (13) entlang der Förderstrecke (6) durch Detektieren einer Wärmeflusszunahme von einer Heizzone (7) zur nächsten, vorzugsweise zur darauf folgenden Heizzone (7) erfolgt.

6. Verfahren nach einem der Ansprüche 1 bis 5, **dadurch gekennzeichnet, dass** die Partikel (1) zusammen mit einer ersten Prozessluft (14) durch den Ofenschacht (5), vorzugsweise durch Beaufschlagung des Ofenschachts (5) mit Unterdruck, gesaugt werden.

7. Verfahren nach Anspruch 6, **dadurch gekennzeichnet, dass** die erste Prozessluft (14) mit im Wesentlichen konstanter Geschwindigkeit durch den Ofenschacht (5) strömt.

8. Verfahren nach Anspruch 7, **dadurch gekennzeichnet, dass** die geblähten Partikel (1) mit im Wesentlichen konstanter Geschwindigkeit durch den Ofenschacht (5) befördert werden, wobei die Geschwindigkeit der geblähten Partikel (1) vorzugsweise von deren Durchmesser abhängt.

9. Verfahren nach einem der Ansprüche 1 bis 5, **dadurch gekennzeichnet, dass** eine erste Prozessluft (14) mit einer Richtungskomponente gegen die Schwerkraft durch den Ofenschacht (5) gesaugt wird.

10. Verfahren nach einem der Ansprüche 1 bis 9, **dadurch gekennzeichnet, dass** eine mittels mindestens eines Drosselorgans (16) regulierte Menge an zweiter Prozessluft (15) von einer inneren Oberfläche (17) des Ofenschachts (5) in Richtung zum radialen Zentrum (18) des Ofenschachts (5) geblasen wird, um ein Anbacken der Partikel (1) an der inneren Oberfläche (17) des Ofenschachts (5) zu verhindern.

11. Verfahren nach einem der Ansprüche 1 bis 10, **dadurch gekennzeichnet, dass** beim Austragen der Partikel (1) aus dem Ofenschacht (5) Kühlluft (19) beigemengt wird, um die Partikel (1) auf unter 100°C, vorzugsweise auf unter 80°C abzukühlen.

12. Verfahren nach einem der Ansprüche 1 bis 11, **dadurch gekennzeichnet, dass** die Partikel (1) nach dem Austragen mittels einer pneumatischen Flugstromförderung (20) in einen Bevorratungsbehälter befördert werden, wobei hierbei ein kühles Fluid, bevorzugt kühle Luft (22), zum Einsatz kommt, wodurch die Partikel (1) abgekühlt werden und im Bevorratungsbehälter vorzugsweise Raumtemperatur aufweisen.

13. Verfahren nach einem der Ansprüche 1 bis 12, **dadurch gekennzeichnet, dass** die Körner gebrochener Mineralstoffe (3) zumindest eine der folgenden Substanzen aufweisen: Perlit, Kaolinit, Hydromagnesit, Obsidian, Kalzit, Magnesit, Dolomit, Huntit.

14. Verfahren nach einem der Ansprüche 1 bis 13, **dadurch gekennzeichnet, dass** der Anteil an Wasser oder Kohlendioxid an den Partikeln (1) in einem Bereich von 0,3 Gew.-% bis 6 Gew.-% liegt.

## Claims

1. A method for the production of expanded glass by means of expanding through thermal treatment of particles, preferably granulate particles (1), consisting of a starting mixture, wherein the starting mixture comprises glass dust grains (2), preferably waste-glass dust grains, and binders, preferably water glass (12), as well as expanding agents which expand the particles (1) during thermal treatment, wherein grains of broken minerals are used as expanding agents, preferably rock dust grains (3), with bound water or carbon dioxide, wherein the particles (1) are introduced into a furnace (4), wherein the particles (1) are heated to at least a critical temperature of the grains of broken minerals (3) which is greater than or equal to a softening temperature of the particles (1), wherein at the critical temperature of the grains of broken minerals (3) the surfaces (10) of the grains of broken minerals (3) become plastic and the grains of broken minerals (3) are expanded as a result of the bound water or carbon dioxide, and the expanded grains of broken minerals (3) expand the respective particle (1) on their part, and wherein the surfaces (9) of the glass dust grains (2) become plastic at the softening temperature of the particles (1) and respectively form a closed surface (11) of the particles (1), **characterized in that** the method comprises the following steps:
- conveying the particles (1) in a furnace shaft (5) of the furnace (4) along a conveying path (6) through a plurality of heating zones (7) arranged separately from each other along the conveying path (6), preferably by gravity;
- discharging the expanded particles (1) from the furnace shaft (5),
- wherein, upon detection of a first reduction in the temperature of the particles (1) between two successive positions (13) along the conveying path (6), which first reduction corresponds to the reduction in the temperature accompanying the isenthalpic expansion, heating elements (8) along the remaining conveying path (3) are regulated depending on the critical temperature of the grains of broken minerals (3) and/or the softening temperature of the particles (1) so that the temperature of the expanded particles (1) does not rise again to or above the critical temperature.

2. A method according to claim 1, **characterized in that** the power of the heating elements (8) is set to zero along the entire remaining conveying path (6).

3. A method according to claim 1, **characterized in that** the particles (1) are brought along the remaining conveying path (6) to a temperature which is in the range of 70% to 110% of the softening temperature of the particles (1) in order to promote glazing of the surfaces (11) of the particles (1).

4. A method according to one of claims 1 to 3, **characterized in that** the temperature of the particles (1) in the furnace shaft (5) is measured directly or indirectly at a plurality of positions (13) spaced apart along the conveying path (6) in order to detect a first decrease in the temperature of the particles (1), preferably of at least 100°C, between two successive positions (13) along the conveying path (6).

5. A method according to one of claims 1 to 4, **characterized in that** the change in the heat flow from the heating elements (8) to the particles (1) is determined, wherein the change between one heating zone (7) and a next one, preferably the next following heating zone (7), is determined, and that the detection of a first reduction in the temperature of the particles (1) between two successive positions (13) along the conveying path (6) is carried out by detecting a heat flow increase from one heating zone (7) to the next, preferably to the next following heating zone (7).

6. A method according to one of claims 1 to 5, **characterized in that** the particles (1) are sucked together with a first process air (14) through the furnace shaft (5), preferably by charging the furnace shaft (5) with a vacuum.

7. A method according to claim 6, **characterized in that** the first process air (14) flows through the furnace shaft (5) at a substantially constant speed.

8. A method according to claim 7, **characterized in that** the expanded particles (1) are conveyed through the furnace shaft (5) at a substantially constant speed, wherein the speed of the expanded particles (1) is preferably dependent on their diameter.

9. A method according to one of claims 1 to 5, **characterized in that** a first process air (14) with a directional component against gravity is sucked through the furnace shaft (5).

10. A method according to one of claims 1 to 9, **characterized in that** an amount of second process air (15) regulated by means of at least one throttling element (16) is blown from an inner surface (17) of the furnace shaft (5) in the direction towards the radial center (18) of the furnace shaft (5) in order to prevent the particles (1) from being caked on the inner surface (17) of the furnace shaft (5).

11. A method according to one of claims 1 to 10, **characterized in that** cooling air (19) is admixed during the discharge of the particles (1) from the furnace shaft (5) in order to cool the particles (1) to below 100°C, preferably below 80°C.

12. A method according to one of claims 1 to 11, **characterized in that** the particles (1) are conveyed after being discharged into a storage container by means of a pneumatic airstream conveying device (20), wherein a cool fluid, preferably cool air (22), is used, by means of which particles (1) are cooled and preferably have room temperature in the storage container.

13. A method according to one of claims 1 to 12, **characterized in that** the grains of broken minerals (3) have at least one of the following substances:
perlite, kaolinite, hydromagnesite, obsidian, calcite, magnesite, dolomite, huntite.

14. A method according to one of claims 1 to 13, **characterized in that** the proportion of water or carbon dioxide on the particles (1) is in a range from 0.3% by weight to 6% by weight.

## Revendications

1. Procédé pour la fabrication de verre expansé au moyen d'une expansion par traitement thermique de particules, de préférence de particules granulées (1) composées d'un mélange initial, lequel mélange initial contient des grains de poudre de verre (2), de préférence des grains de verre recyclé pilé, et des liants, de préférence du verre liquide (12), ainsi que des agents gonflants qui font gonfler les particules (1) lors du traitement thermique, les agents gonflants utilisés étant des matières minérales concassées, de préférence des grains de poudre de roche (3), avec de l'eau liée ou du dioxyde de carbone, dans lequel les particules (1) sont déposées dans un four (4), les particules (1) étant amenées au moins à une température critique des grains de matières minérales concassées (3) qui est supérieure ou égale à une température de ramollissement des particules (1), les surfaces (10) des grains de matières minérales concassées (3) devenant plastiques à la température critique des grains de matières minérales concassées (3) et les grains de matières minérales concassées (3) étant expansés à cause de l'eau liée ou du dioxyde de carbone et les grains de matières minérales concassées (3) en expansion faisant à leur tour gonfler les particules (1) correspondantes,
et dans lequel, à la température de ramollissement des particules (1), les surfaces (9) des grains de poudre de verre (2) deviennent plastiques et forment chacune une surface fermée (11) des particules (1),
**caractérisé en ce que** le procédé comprend les étapes suivantes :
- transport des particules (1) dans une cuve (5) du four (4) le long d'un trajet de transport (6) à travers plusieurs zones de chauffage (7) disposées séparément les unes des autres le long du trajet de transport (6), de préférence par gravité ;
- extraction des particules (1) expansées de la cuve du four (5),
- des éléments chauffants (8) le long du reste du trajet de transport (6) étant régulés en fonction de la température critique des grains de matières minérales concassées (3) et/ou de la température de ramollissement des particules (1) lorsqu'une première diminution de la température des particules (1) entre deux positions (13) successives le long du trajet de transport (6) est détectée, laquelle première diminution correspond à la diminution de température associée à l'expansion isenthalpique, de telle sorte que la température des particules (1) expansées ne remonte pas jusqu'à la température critique ou au-delà.

2. Procédé selon la revendication 1, **caractérisé en ce que** la puissance des éléments chauffants (8) sur tout le trajet de transport (6) restant est réglée à zéro.

3. Procédé selon la revendication 1, **caractérisé en ce que** les particules (1) sont amenées, sur le reste du trajet de transport (6), à une température située entre 70 % et 110 % de la température de ramollissement des particules (1), afin de favoriser une vitrification des surfaces (11) des particules (1).

4. Procédé selon l'une des revendications 1 à 3, **caractérisé en ce que** la température des particules (1) dans la cuve du four (5) est mesurée directement ou indirectement en plusieurs positions (13) distantes les unes des autres le long du trajet de transport (6), afin de détecter une première diminution de la température des particules (1), de préférence d'au moins 100 °C, entre deux positions (13) successives le long du trajet de transport (6).

5. Procédé selon l'une des revendications 1 à 4, **caractérisé en ce que** le changement du flux thermique des éléments chauffants (8) vers les particules (1) est déterminé, le changement entre une zone de chauffage (7) et une zone de chauffage suivante (7), de préférence la suivante, est déterminé, et **en ce que** la détection d'une première diminution de la température des particules (1) entre deux positions (13) successives le long du trajet de transport (6) est effectuée par la détection d'une augmentation du flux thermique d'une zone de chauffage (7) à une zone de chauffage suivante (7), de préférence la suivante.

6. Procédé selon l'une des revendications 1 à 5, **caractérisé en ce que** les particules (1) sont aspirées avec un premier air de process (14) à travers la cuve du four (5), de préférence en appliquant une dépression à la cuve du four (5).

7. Procédé selon la revendication 6, **caractérisé en ce que** le premier air de process (14) circule à une vitesse sensiblement constante à travers la cuve du four (5).

8. Procédé selon la revendication 7, **caractérisé en ce que** les particules (1) expansées sont transportées à une vitesse sensiblement constante à travers la cuve du four (5), la vitesse des particules (1) expansées dépendant de préférence de leur diamètre.

9. Procédé selon l'une des revendications 1 à 5, **caractérisé en ce qu'**un premier air de process (14) est aspiré à travers la cuve du four (5) avec une composante directionnelle qui va contre la gravité.

10. Procédé selon l'une des revendications 1 à 9, **caractérisé en ce qu'**une quantité d'un deuxième air de process (15) régulée au moyen d'au moins un organe d'étranglement (16) est injectée à partir d'une surface intérieure (17) de la cuve du four (5) en direction du centre radial (18) de la cuve du four (5) afin d'empêcher le dépôt des particules (1) sur la surface intérieure (17) de la cuve du four (5).

11. Procédé selon l'une des revendications 1 à 10, **caractérisé en ce que** lors de l'extraction des particules (1) hors de la cuve du four (5), un air de refroidissement (19) est ajouté afin de refroidir les particules (1) à moins de 100 °C, de préférence à moins de 80 °C.

12. Procédé selon l'une des revendications 1 à 11, **caractérisé en ce qu'**après l'extraction, les particules (1) sont transportées dans un réservoir au moyen d'un transport en lit fluidisé (20) en utilisant un fluide frais, de préférence de l'air frais (22), de sorte que les particules (1) sont refroidies et sont de préférence à la température ambiante dans le réservoir.

13. Procédé selon l'une des revendications 1 à 12, **caractérisé en ce que** les grains de matières minérales concassées (3) contiennent au moins une des substances suivantes : perlite, kaolinite, hydromagnésite, obsidienne, calcite, magnésite, dolomite, huntite.

14. Procédé selon l'une des revendications 1 à 13, **caractérisé en ce que** la part d'eau ou de dioxyde de carbone dans les particules (1) est comprise entre 0,3 % du poids et 6 % du poids.
